Europäisches Patentamt

European Patent Office

Office européen des brevets

(19)

(11) Veröffentlichungsnummer: **0 077 065**
**A1**

(12) **EUROPÄISCHE PATENTANMELDUNG**

(21) Anmeldenummer: 82109413.3

(22) Anmeldetag: 12.10.82

(51) Int. Cl.³: **A 22 C 13/02**

(30) Priorität: **13.10.81 DE 3140583**

(43) Veröffentlichungstag der Anmeldung: **20.04.83**
**Patentblatt 83/16**

(84) Benannte Vertragsstaaten: **AT BE CH DE FR GB IT LI NL SE**

(71) Anmelder: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau-Dornheim (DE)**

(74) Vertreter: **Beyer, Werner, Dipl.-Ing. et al, Staufenstrasse 36, II P.O. Box 174109, D-6000 Frankfurt/Main (DE)**

(54) Vorrichtung zum axialen Raffen von synthetischem Schlauchmaterial, insbesondere Kunstdarm für die Wurstherstellung.

(57) Bei einer Vorrichtung zum axialen Raffen von synthetischem Schlauchmaterial (12), insbesondere Kunstdarm für die Wurstherstellung, auf einem langgestreckten zylindrischen Dorn (10), mit wenigstens zwei am Dornumfang verteilt angreifenden, synchron antreibbaren Raffrädern (20), die ausserdem gemeinsam um die Dornachse kreisend antreibbar und mit flügelartigen dünnwandigen Zähnen (26) versehen sind, welche dem Dornquerschnitt entsprechend teilkreisförmig ausgeklehlt sind, sind die Zähne (26) derart zu den Radachsen (24) geführt, dass die Tangente (30) an die Bewegungsbahn der Zahnenden zumindest in dem an dem tiefsten Eingriff mit dem Dorn (10) anschliessenden Drehungsquadranten einen spitzen Winkel (90°) mit der Vorderseite (28) des Zahns einschliesst. Durch diese Ausbildung wird ein rascheres radiales Abgleiten der Zähne von der zuletzt gebildeten Falte unter einem spitzeren Winkel zur Dornachse erzielt, wodurch Störungen des Faltenbildes vermieden und Beschädigungen des Schlauchmaterials wirksam verhindert werden.

Vorrichtung zum axialen Raffen von synthetischem Schlauchmaterial, insbesondere Kunstdarm für die Wurstherstellung

---

Die Erfindung betrifft eine Vorrichtung zum axialen Raffen von synthetischem Schlauchmaterial, insbesondere Kunstdarm für die Wurstherstellung, auf einem langgestreckten zylindrischen Dorn unter Einleitung von Blähluft in das Schlauchinnere, bestehend aus einem Satz von mindestens drei um den Dorn gleichmäßig verteilter und um quer zur Dornachse gerichtete Achsen synchron drehend angreifbarer Raffräder, die außerdem gemeinsam um die Dornachse kreisend antreibbar und an ihren Naben mit flügelartigen dünnwandigen Zähnen versehen sind, deren Kopfenden dem Dornquerschnitt entsprechend teilkreisförmig ausgekehlt sind und eine solche Breite aufweisen, daß sie sich mit den Zähnen der benachbarten Räder teilweise überlappen.

Eine solche Vorrichtung ist aus der DE-OS 29 44 623 bekannt. Bei der bekannten Raffvorrichtung beträgt die Anzahl der Raffräder vorzugsweise vier, wobei die Zähne eine solche Breite aufweisen, daß sich ihre um nahezu 180° erstreckenden Auskehlungen am Dornumfang überlappen. Ferner sind die Zähne von Rad zu Rad derart in Drehrichtung ihrer Achsen versetzt angeordnet, daß beim Kreisen der Räder um den zylindrischen Dorn die Zähne eines beliebigen Raffrades den Zähnen des in Richtung des Kreisens nacheilenden Raffrades in Vorschubrichtung des Schlauchmaterials unmittelbar folgen.

Die mit der bekannten Vorrichtung hergestellten Schlauchraupen zeichnen sich durch hohe Faltendichte und große Steifigkeit aus. Es hat sich jedoch gezeigt, daß vor allem bei größeren Schlauchkalibern eine gewisse Gefahr besteht, daß die Zähne am Ende der Faltenlegung mit den Enden der Auskehlungen an der jeweils gebildeten letzten Falte hängenbleiben und diese gleichsam nach auswärts heraushebeln, wodurch nicht nur das Faltenbild gestört wird, sondern auch die erhöhte Gefahr besteht, daß das Schlauchmaterial reißt.

Der Erfindung lieg daher die Aufgabe zugrunde, vor allem auch bei größeren Schlauchkalibern eine einwandfreie Faltenlegung zu gewährleisten und die Gefahr von Beschädigungen des Schlauchmaterials auszuschließen. Die erfindungsgemäße Lösung dieser Aufgabe geht von der Überlegung aus, daß die Faltenlegung offensichtlich umso glatter vonstatten geht und umso weniger mit der Gefahr von Beschädigungen verbunden ist, je schneller der einzelne Zahn im Verlauf der Raffraddrehung nach seinem tiefsten Eingriff in das über den Dorn verlaufende Schlauchmaterial aus dem Eingriffsbereich mit der dabei gebildeten Falte herausgeführt wird, und besteht darin, daß die Zähne derart zu den Radachsen geführt sind, daß die Tangente an die Bewegungsbahn der Kopfenden der Zähne zumindest in dem an den tiefsten Eingriff eines jeden Zahns mit dem Dorn anschließenden Drehungsquadranten einen spitzen Winkel mit der Vorderseite des Zahns einschließt.

Der vorstehende Lösungsgedanke läßt sich auf zweierlei Weise verwirklichen.

Nach einem ersten Ausgestaltungsmerkmal der Erfindung sind die Zähne fest an den Naben der Raffräder in einer zur Radialrichtung entgegen dem Drehsinn gekippten Stellung angeordnet. Durch diese Ausbildung wird erreicht, daß sich die Fußpunkte der Zähne bereits jenseit ihrer größten Annäherung an die Dornachse befinden, wenn die Zähne lotrecht zur Dornachse stehen, so daß die Zähne dann sehr schnell aus dem Eingriffsbereich mit der letzten Raupenfalte herausbewegt werden und demgemäß einen verhältnismäßig spitzen Kippwinkel gegenüber der Stirnebene der Raupenfalte einnehmen, wenn sie außer Eingriff mit der letzten Raupenfalte kommen.

Eine andere Ausführungsform zur Verwirklichung des Grundgedankens der Erfindung sieht vor, daß die Zähne radial ver-

- 3 -

schieblich an den Naben der Raffräder gelagert und an undrehbaren Steuerkurven geführt sind. Diese Anordnung ähnelt den bekannten Flügelzellenpumpen, wobei die Steuerkurve jedoch mangels
eines "Pumpengehäuses" an den inneren Enden der hier von den
Zähnen gebildeten Flügeln angreifen. Auch hierbei ist es besonders zweckmäßig, wenn die Steuerkurven wie das Gehäuse einer
Flügelzellenpumpe Kreisform aufweisen und exzentrisch zu den
Radachsen angeordnet sind. Die Wirkung der zuletzt erwähnten
Ausführungsform der Erfindung ist im wesentlichen die gleiche
wie bei der Ausführungsform mit fest an den Radnaben angeordneten
Zähnen.

Nach einem besonderen Ausgestaltungsmerkmal der Erfindung sind
die Naben der Raffräder derart ausgebildet, daß sie das aufgeblähte Schlauchmaterial in Bezug auf den Dorn zentrieren. Durch
diese Ausbildung wird das Schlauchmaterial an einem radialen Ausweichen beim Eingriff der Zähne gehindert und volle Ausnutzung
des Radialabstandes zwischen zentrierter aufgeblähter Hülle und
Dornoberfläche zur Faltenbildung gewährleistet, was zu einer noch
größeren Dichte und Steifigkeit der gebildeten Schlauchraupe führt
und ein optimales Verhältnis von geraffter zu ungeraffter Schlauchlänge ergibt.

Ein Ausführungsbeispiel zu den beiden Ausführungsformen der
Erfindung wird nachstehend in Verbindung mit der Zeichnung  näher
erläutert. Es zeigen:

Fig. 1:            in Seitenansicht eine Raffvorrichtung mit
                   festen Zähnen,

Fig. 2:            einen Querschnitt nach Linie II-II in Fig. 1,

Fig. 3:            in Seitenansicht eine Raffvorrichtung mit
                   gesteuert radial beweglichen Zähnen und

Fig. 4:            einen Querschnitt nach Linie IV-IV in Fig. 3.

In allen Zeichnungsfiguren ist mit 1o ein nur mit einem Teil
seiner Länge dargestelltes hohlzylindrisches Raffrohr bezeichnet,
das mit seinem (nicht gezeigten) linken Ende in bekannter Weise
an einem Träger wie beispielsweise  einer Revolverscheibe befestigt

- 4 -

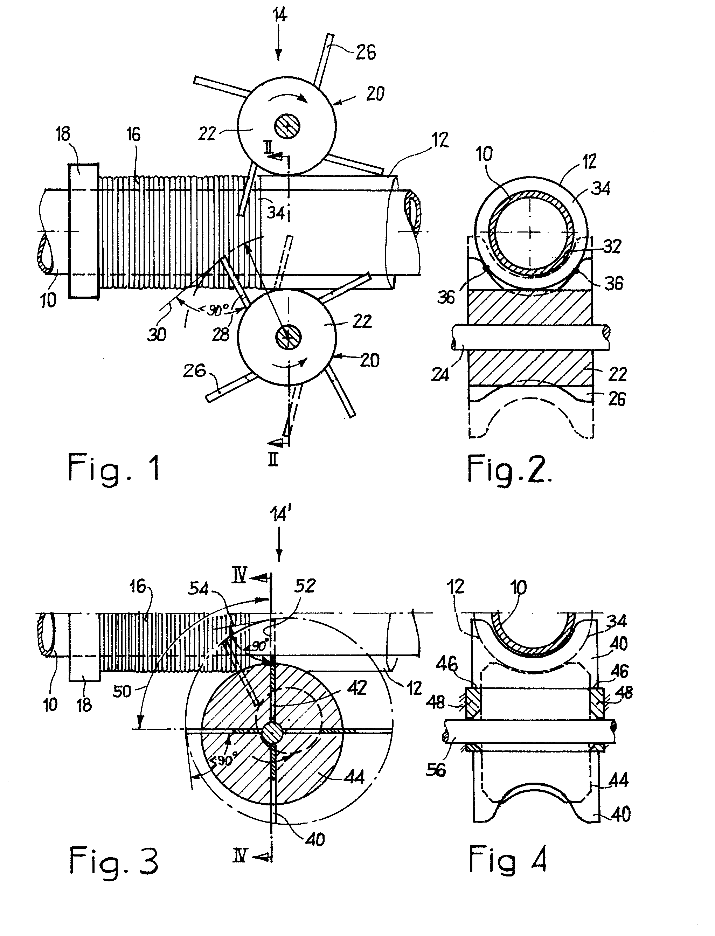

ist. Über das rechte Ende des Raffrohrs 1o zugeführtes synthetisches Schlauchmaterial 12, insbesondere Kunstdarm für die
Wurstherstellung, wird mit Hilfe von durch das Raffrohr eingeleiteter Blähluft aufgebläht und mittels einer in ihrer Gesamtheit in Fig. 1 und 2 mit 14 und in Fig. 3 und 4 mit 14' bezeichneten Raffvorrichtung unter Faltenbildung zu einer Raupe 16
gegen einen Bund 18 auf dem Raffrohr 1o gerafft.

Bei dem Ausführungsbeispiel nach den Figuren 1 und 2 besteht
die Raffvorrichtung 14 aus mehreren, beispielsweise vier am
Dornumfang verteilten, identisch ausgebildeten Raffrädern 2o,
von denen jedoch nur zwei gegenüberliegende Raffräder dargestellt sind. Die Raffräder 2o sitzen mit Naben 22 auf quer
zur Dornachse gerichteten Achsen oder Wellen 24 und sind auf
nicht gezeigte Weise synchron im Sinn der eingezeichneten
Pfeile antreibbar.

Die Naben 22 sind zylindrisch ausgebildet und haben einen
solchen Durchmesser, daß das aufgeblähte Schlauchmaterial 12
zwischen in Bezug auf den Dorn 1o zentriert wird.

Ein jedes Raffrad 2o trägt am Umfang seiner Nabe 22 mehrere,
im Beispielsfall vier, dünnwandige flache Zähne 26 aus vorzugsweise elastischem Material wie künstlichem Gummi, die sich
jedoch nicht radial zur Drehachse des Raffrades 2o erstrecken,
sondern entgegen dem Drehsinn gekippt sind. Dadurch schließt
die Vorderseite 28 eines jeden Zahns mit der Tangente 3o an
die Bewegungsbahn der Zahnenden einen spitzen Winkel (9o°) ein.
Die Zähne 26, sind wie in Fig. 2 bei 32 in der Stellung des
tiefsten Eingriffs gestrichelt angedeutet ist, dem Dornquerschnitt entsprechend teilkreisförmig ausgekehlt. Dadurch wird
erreicht, daß das über dem Dorn 1o verlaufende Schlauchmaterial
12 im gesamten Bereich der Auskehlung 32 erfaßt und bei der
Drehung des Raffrades 2o unter Faltenbildung in Richtung zum
Bund 18 mitgenommen wird.

- 5 -

Wie Fig. 1 deutlich erkennen läßt, sind die Zähne 2o in der
(gestrichelt eingezeichneten) Stellung ihres tiefsten Eingriffs
nach rückwärts gegenüber einer beliebigen Radialebene des
Dorns 1o - wie beispielsweise der Ebene der Schnittlinie II-II -
geneigt, wobei ihre Fußpunkte jedoch schon auf der vom Dorn
wegdrehenden Hälfte des Nabenumfangs liegen. Demzufolge wird
auch der Winkel, unter dem die Vorderseite 28 der Zähne 26 -
wie in Fig. 1 der linke obere Zahn des unteren Raffrades
bzw. in Fig. 2 der obere Zahn - die Anlage gegen die letzte
Fale 34 der Raupe 16 an den Stellen 36 (Fig. 2) verliert,
noch ziemlich spitz im Verhältnis zu den bisher bekannten
radialen Zähnen sein, wodurch ein besseres radiales Abgleiten
der Zähne von der jeweils letzten Raupenfalte 34 gewährleistet
und die Geahr eines Heraushebelns dieser Falte mit der Folge
ihrer Beschädigung wirksam verhindert wird.

Bei dem Ausführungsbeispiel nach den Figuren 3 und 4 wird dieselbe Wirkung mit Hilfe radialer Zähne 4o erzielt, die jedoch
nicht fest, wie bei dem Ausführungsbeispiel nach den Figuren
1 und 2, sondern ähnlich den Flügeln einer Flügelzellenpumpe
beweglich in radialen Schlitzen 42 von Naben 44 der dortigen
Raffräder geführt sind und sich mit ihren inneren Enden bei
46 unter der Wirkung (nicht gezeigter) Federmittel oder durch
Zangsführung an undrehbaren Exzenterringen 48 abstützen. Die
Exzenterringe bilden somit Steuerkurven für die Zähne 4o,
durch welche diese in dem für die Faltenbildung maßgeblichen
Drehungsquadranten 5o im wesentlichen die gleiche Kipplage zu
ihrer Bewegungsbahn einnehmen. Auch hierbei ist demzufolge der
Winkel zwischen der Vorderseite 52 eines Zahns und der Tangente
54 an die Bewegungsbahn der Zahnenden ein spitzer Winkel (9o°).

Die Naben 44 sitzen in diesem Fall fest auf sich durch die
Exzent erringe 48 erstreckenden Wellen 56 und sind mit diesen
vorzugsweise aus einem Stück gefertigt. Im Gegensatz zum
ersten Ausführungsbeispiel sind die Naben 44 nicht zylindrisch ausgebildet, sondern in der Querschnittsmitte der aufgeblähten Schlauchhülle entsprechend ausgekehlt und an den axialen Enden kegelstumpfförmig verjüngt, um den entsprechend ausgebildeten Naben der Nachbarzähne Platz zu machen. Die Naben aller vier Raffräder ergänzen sich somit zu einer Art Führungshülse mit kreisförmigem Innenquerschnitt, in welcher das aufgeblähte Schlauchmaterial 12 gegenüber dem Dorn 1o zentriert wird. Gleichzeitig wird auf wenigstens einem Teil der Nabenlänge eine ausreichend radiale Erstreckung der Schlitze 42 zur sicheren Führung der Zähne 2o gewährleistet.

0077065

Patentansprüche

---

1. Vorrichtung zum axialen Raffen von synthetischem Schlauchmaterial, insbesondere Kunstdarm für die Wurstherstellung,
auf einem langgestreckten zylindrischen Dorn unter Einleitung
von Blähluft in das Schlauchinnere, bestehend aus einem Satz
von mindestens drei um den Dorn gleichmäßig verteilter und
um quer zur Dornachse gerichtete Achsen synchron drehend
angreifbarer Raffräder, die außerdem gemeinsam um die Dornachse kreisend antreibbar und an ihren Naben mit flügelartigen
dünnwandigen Zähnen versehen sind, deren Kopfenden dem Dornquerschnitt entsprechend teilkreisförmig ausgekehlt sind und
eine solche Breite aufweisen, daß sie sich mit den Zähnen
der benachbarten Räder teilweise überlappen, d a d u r c h
g e k e n n z e i c h n e t , daß die Zähne (26; 4o) derart
zu den Radachsen (24; 56) geführt sind, daß die Tangente
(3o; 54) an die Bewegungsbahn der Kopfenden der Zähne (26; 4o)
zumindest in dem an den tiefsten Eingriff eines jeden Zahns
mit dem Dorn (1o) anschließenden Drehungsquadranten (5o)
einen spitzen Winkel mit der Vorderseite (28; 52) des Zahns
(26; 4o) einschließt.

2. Vorrichtung nach Anspruch 1, d a d u r c h   g e k e n n -
z e i c h n e t , daß die Zähne (26) fest an den Naben (22)
der Raffräder (2o) in einer zur Radialrichtung entgegen
dem Drehsinn gekippten Stellung angeordnet sind.

3. Vorrichtung nach Anspruch 1, d a d u r c h   g e k e n n -
z e i c h n e t , daß die Zähne (4o) radial verschieblich
an den Naben (44) der Raffräder gelagert und an undrehbaren Steuerkurven (48) geführt sind.

4. Vorrichtung nach Anspruch 3, d a d u r c h  g e k e n n -
   z e i c h n e t , daß die Steuerkurven (48) Kreisform
   aufweisen und exzentrisch zu den Radachsen (56) angeordnet
   sind.

5. Vorrichtung nach einem der vorhergehenden Ansprüche, d a -
   d u r c h  g e k e n n z e i c h n e t , daß die Naben
   (22) der Raffräder (2o) derart ausgebildet sind, daß sie
   das aufgeblähte Schlauchmaterial (12) in Bezug auf den
   Dorn (1o) zentrieren.

Fig. 1

Fig. 2.

Fig. 3

Fig 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG · int. Cl. ³) |
|---|---|---|---|
| Y | EP-A-0 028 785 (KOLLROSS) <br> * Seite 6, Zeile 1 - Seite 7, Zeile 23 * | 1,5 | A 22 C 13/02 |
| Y | US-A-2 583 654 (KORSGAARD) <br> * Spalte 10, Zeile 24 - Spalte 11, Zeile 56; Figur 9 * | 1,2 | |
| A | CH-A- 452 382 (JOHNSON & JOHNSON) <br> * Spalte 4, Zeile 55 - Spalte 5, Zeile 5 * | 1,2 | |
| A | DE-B-1 253 093 (WOLFF) | | |
| A | FR-A-1 240 427 (UNION CARBIDE) | | RECHERCHIERTE SACHGEBIETE (Int. Cl. ³) <br><br> A 22 C |
| A | DE-B-1 632 115 (KALLE) | | |

Der vorliegende Recherchenbericht wurde für alle Patentansprüche erstellt.

| Recherchenort | Abschlußdatum der Recherche | Prüfer |
|---|---|---|
| DEN HAAG | 14-01-1983 | DE LAMEILLIEURE D. |